# EUROPEAN PATENT SPECIFICATION

(11) **EP 3 404 379 B1**
(45) Date of publication and mention of the grant of the patent: **12.10.2022**
(21) Application number: 17171125.2
(22) Date of filing: 15.05.2017
(51) Int. Cl.: G01J 1/04, G01J 1/06, G01S 17/02, G01S 3/783, G01S 3/781, G01J 1/02, G01J 1/42, H01L 31/0216

(54) **OPTICAL DEVICE FOR ANGLE MEASUREMENTS**
OPTISCHE VORRICHTUNG ZUR WINKELMESSUNG
DISPOSITIF OPTIQUE POUR MESURES D'ANGLE

(43) Date of publication of application: 21.11.2018
(73) Proprietor: ams AG, 8141 Premstätten (AT)
(72) Inventor: Enichlmair, Hubert, 8044 Weinitzen (AT)
(74) Representative: Epping - Hermann - Fischer

(56) References cited:
- US-A- 3 825 350
- US-A1- 2011 096 021
- US-A1- 2012 132 809

## Description

The invention relates to an optical device for measuring the absolute value of an angle between the direction of incoming light and the surface of a semiconductor chip.

US 5 726 443 discloses a vision system and proximity detector in the form of an occluding mask with a series of holes forming parallel light pathways. The mask is mounted directly over an array of light sensors on a substrate.

US 2016/0070358 A1 discloses a method for gesture detection. Directional sensor signals are generated by detecting a fraction of emitted light that is reflected by a movable object. A directional light sensor array is used, which comprises an array of photodiodes. Each photodiode is placed at the end of a channel formed in a stack of metal layers.

US 2016/0231824 A2 discloses an optical user interface and an optical gesture system. A light source of a smartphone emits light within a radiation field, which is tilted to the screen of the smartphone. A position sensor, which may comprise an array of photodiodes, detects light within a field of view, which is perpendicular to the screen of the smartphone.

US 2016/0309564 A1 discloses an electronic device with directional ambient light sensor. An array of light sensors is formed on the surface of a silicon substrate. Light angle restriction structures are formed in opaque layers above the substrate by openings that are aligned to form channels with different angular orientations.

US 2012/0132809 A1 discloses a semiconductor device with integrated proximity sensor and ambient light sensor. First and second pixels are provided with detectors, and an interference filter is positioned over substantially all of the pixels. The first pixel is additionally provided with a high-pass (IR-pass) radiation absorption filter. The spectral responses of the first and second pixels are substantially identical in the infrared spectral region. The infrared content of the ambient light is substantially deleted from the signal of the second pixel by subtracting the signal of the first pixel. The resultant difference signal provides an indication of the visible ambient light level. The first pixel is additionally used for proximity measurements. The first and second pixels can be provided with different fields of view.

US 3,825,350 A discloses a radiation sensing system with a dielectric filter varying its response according to the angle of incidence of radiation. An optical system passes radiation from the entire field of view at a substantially perpendicular angle through a portion of the filter to generate a reference signal, which is compared with detector signals obtained at inclined incidence.

US 2011/0096021 A1 discloses a liquid crystal display device comprising an infrared filter, which blocks light emitted from an external source or reflected light, when the surface of the panel is touched.

It is an object of the invention to provide an optical device for angle measurement that does not rely on apertures.

This object is achieved with the optical device for angle measurement according to claim 1. Embodiments derive from the dependent claims.

The optical device for angle measurement utilizes the dependency of the intrinsic transmission on the angle of light incidence. This dependency is typical of an interference filter in combination with a colour filter. The optical device comprises a substrate of semiconductor material, a photodetector and a further photodetector arranged in the substrate at a main surface, a filter arranged above the photodetector, and a further filter arranged above the further photodetector. The filter is a colour filter, and the further filter includes an interference filter and a further colour filter.

In an embodiment of the optical device, the colour filter includes a first filter layer, a second filter layer and a third filter layer. These filter layers may especially form a red filter, a green filter and a blue filter. The further colour filter includes a further first filter layer, a further second filter layer and a further third filter layer. These further filter layers may especially form a further red filter, a further green filter and a further blue filter.

In a further embodiment the interference filter is arranged between the substrate and the further colour filter.

In a further embodiment an epitaxial layer of the substrate provides the main surface.

In a further embodiment a transparent top layer is present on the main surface, and the filter and the further filter are arranged on the top layer.

In a further embodiment an aperture and a further aperture are arranged in the top layer. The aperture is arranged above the photodetector and the further aperture is arranged above the further photodetector.

A further embodiment comprises a light source, an opaque housing accommodating the substrate and the light source, a window of the housing above the photodetector and the further photodetector, and a further window of the housing above the light source.

A further embodiment comprises an integrated circuit configured for evaluating signals from the photodetector and the further photodetector.

The following is a detailed description of examples of the optical device in conjunction with the appended figures.
- Figure 1: is a cross section of an embodiment of the optical device.
- Figure 2: illustrates a measurement using the optical device with a light source.
- Figure 3: illustrates a measurement using two optical devices.

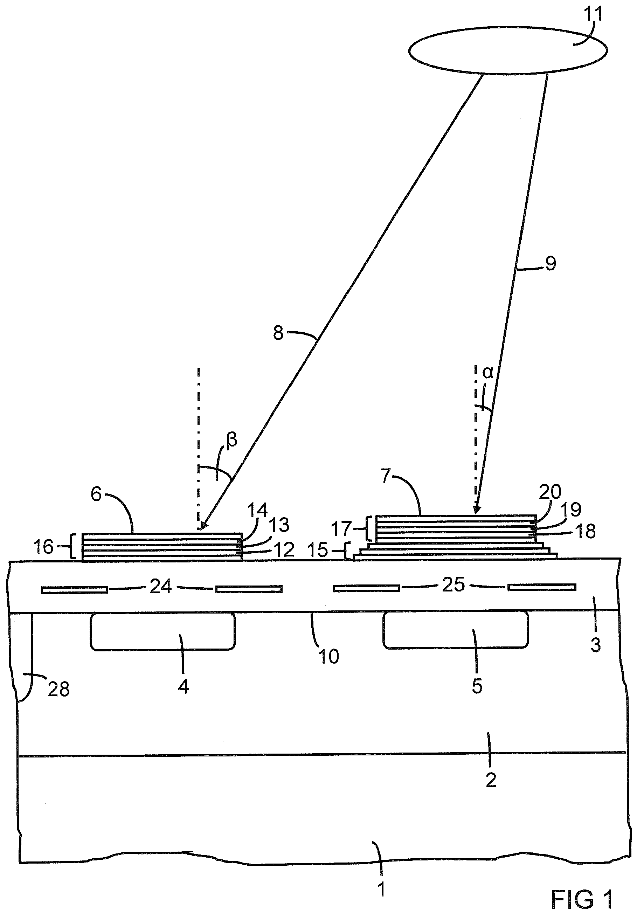

Figure 1 is a cross section of an optical device comprising a substrate 1 of semiconductor material, which may be silicon, for instance, and has a main surface 10. The substrate 1 may comprise an optional epitaxial layer 2, which provides the main surface 10. The epitaxial layer 2 may have a thickness of typically 20 µm, for instance. An optional transparent top layer 3 can be arranged on the main surface 10 of the substrate 1 and may be a dielectric like silicon dioxide, for instance.

A photodetector 4 and a further photodetector 5, which may be photodiodes, especially components of an integrated circuit, for instance, are arranged in the substrate 1 at the main surface 10 at a distance from one another. When an epitaxial layer 2 is present, the photodetector 4 and the further photodetector 5 are arranged in the epitaxial layer 2, as shown in Figure 1 by way of example. There is no structural restriction on the photodetectors 4, 5, which may especially comprise an n-well in p-type semiconductor material, in particular in the semiconductor material of the epitaxial layer 2, for instance. An integrated circuit 28 may be provided for the evaluation of signals generated by the photodetectors 4, 5. Components of the integrated circuit, which is only schematically indicated in Figure 1, may be arranged in the substrate 1 and/or in the epitaxial layer 2.

An aperture 24 can be arranged above the photodetector 4, and a further aperture 25 can be arranged above the further photodetector 5. The apertures 24, 25 can especially be arranged in the top layer 3. They may be formed by structured metal layers comprising openings above the photodetectors 4, 5, for instance.

If the photodetectors 4, 5 are provided by n-type doped wells in p-type doped semiconductor material, the depth of the n-type doped wells may be typically around 4 µm, for instance, and the doping concentration may be typically in the order of 6·10¹⁶ cm⁻³, for instance. The resistivity of the p-type semiconductor material, in particular the epitaxial layer 2, may be around 20 Ωcm.

A filter 6 is arranged above the photodetector 4, and a further filter 7 is arranged above the further photodetector 5. If the top layer 3 is present, the filter 6 and the further filter 7 can be arranged on the top layer 3.

The filter 6 is a colour filter 16 and may in particular be an organic colour coating filter, which can be applied on the top layer 3 by the technique of spin coating, for example. The colour filter 16 may in particular comprise a first filter layer 12 for blue, a second filter layer 13 for red and a third filter layer 14 for green. The order of sequence of the red, green and blue filter layers can be permuted.

The further filter 7 comprises an interference filter 15 and a further colour filter 17. The interference filter 15 may be formed by a sequence of distinct layers as indicated in Figure 1. In particular, the interference filter 15 can comprise alternating thin layers of materials of high refractive index and low refractive index. The number of filter layers and their respective thicknesses may be chosen such that the achieved spectral transmission meets the requirements for a specific angle of incidence.

The further colour filter 17 may in particular be an organic colour coating filter and may be essentially similar to the colour filter 16. The further colour filter 17 can be applied on the interference filter 15 by spin coating, for example. The further colour filter 17 may comprise a further first filter layer 18 for blue, a further second filter layer 19 for red and a further third filter layer 20 for green. The order of sequence of the further red, green and blue filter layers can be permuted. The total thickness of the further colour filter 17 may be typically about 7 µm, for instance.

The overall transmission of the further colour filter 17 is small in the region of the visible light (380 - 780 nm) and high for higher wavelengths. The further colour filter 17 blocks unwanted spurious light in the visible range and acts as a high-pass filter for longer wavelengths.

Figure 1 shows an incident ray 8 and a further incident ray 9, which are received from a reflecting object 11. The incident ray 8 passes the filter 6 and is detected by the photodetector 4. The further incident ray 9 passes the further filter 7 and is detected by the further photodetector 5. Figure 1 indicates the angles of incidence α, β of the incident rays 8, 9 with respect to a normal to the main surface 10. The angles of incidence α, β are approximately equal if the object 11 is small and the distances between the object 11 and each of the photodetectors 4, 5 are large. The angle of incidence α of the further incident ray 9 is measured by the optical device.

In a measurement using the optical device, the photodetector 4 is used as a reference channel sensor, and the further photodetector 5 is used as an angle meter channel sensor. Due to the nature of absorbing filters, the position of the bandpass edge around 800 nm does not significantly change with the angle of incidence. This property is used to cut off spectral features having smaller wavelengths than 800 nm.

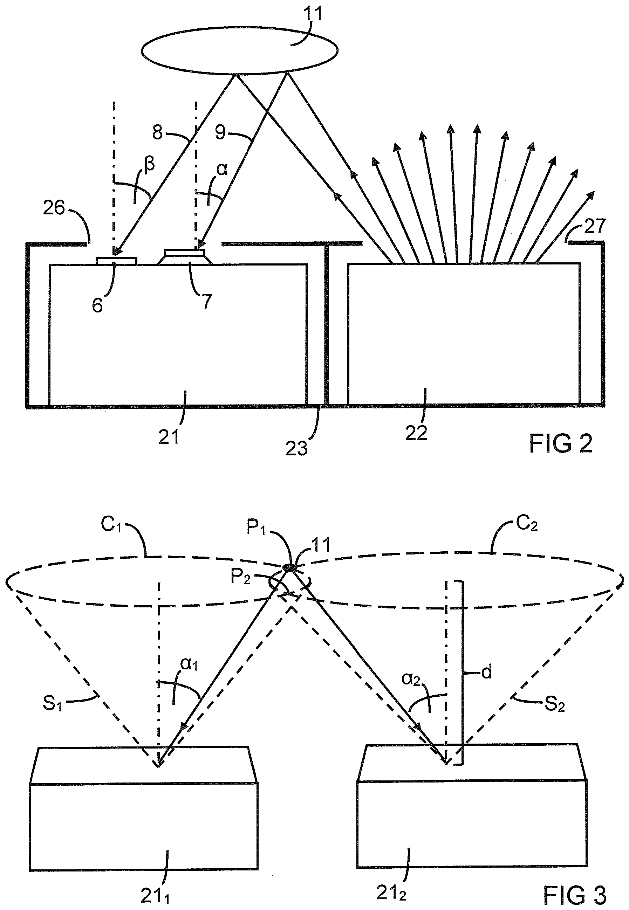

Figure 2 is a schematical cross section of a further embodiment, which comprises an optical device 21 according to Figure 1 and a light source 22, which may be a light-emitting diode, for instance. Any other light source emitting in the near infrared region can be used instead. The light source 22 can typically have a spectrum comprising a peak at about 940 nm wavelength, for example.

The optical device 21 and the light source 22 are mounted in a housing 23, which is optionally formed by an opaque material. If the housing 23 is not transparent to the radiation that is to be detected, a window 26 of the housing 23 is provided above the photodetector 4 and the further photodetector 5, and a further window 27 of the housing 23 is provided above the light source 22.

The further photodetector 5 detects the angle α of the reflected light passing the further filter 7. This is schematically indicated in Figure 2 by the further incident ray 9. The photodetector 4 under the filter 6 also receives reflected light, which is indicated in Figure 7 by the incident ray 8. The photodetector 4 is provided as a reference detector to normalize the detected light intensity.

Figure 3 is a schematical illustration of a measurement using two optical devices 21₁ and 21₂ according to Figure 1 or Figure 2. The main surfaces 10 of the optical devices 21₁ and 21₂ are arranged on the same level, so that the vertical distance d from the object 11 can be supposed to be essentially the same for both optical devices 21₁ and 21₂. A measurement of the vertical distance d and the angles α₁ and α₂ can be used to derive possible positions of the object 11.

The object 11 is viewed from the first optical device 21₁ at a measured first angle α₁ and from the second optical device 21₂ at a measured second angle α₂. The first and second angles α₁, α₂ are half the opening angles of a first cone S₁ and a second cone S₂. The plane that is parallel to the main surfaces 10 and at the measured vertical distance d above the optical devices 21₁ and 21₂ intersects the first cone S₁ in a first circle C₁ and the second cone S₂ in a second circle C₂. The first circle C₁ and the second circle C₂ intersect in a first intersection point P₁ and in a second intersection point P₂. The object 11 must be located at one of the intersection points P₁, P₂.

In the example shown in Figure 3, the object 11 is located at the first intersection point P₁. A complete determination of the location of the object 11 requires a third angle measurement. For gesture sensing for example, a measurement according to Figure 3 is sufficient, because only the change of position is essential for such applications. The field of view of the first optical device 21₁ is limited by the first cone S₁ for which the first angle α₁ is maximal, and the field of view of the second optical device 21₂ is limited by the second cone S₂ for which the second angle α₂ is maximal.

The integral transmission decreases for increasing angles of incidence. The actual signal that is detected by the photodetector depends on the spectral intensity of the light source. The intensity of the light received from the light source is determined to determine the angle of incidence.

When the angle of incidence of light is changed, the length of the optical path within an interference filter and hence the conditions for constructive and destructive interference are also changed. As a result, the spectral transmission of the filter shifts to smaller wavelengths for higher angles. If a light source and/or a detector with a limited spectral bandwidth is used, the corresponding signal changes with the angle of the incoming light.

Interference filters generally show a transmission over a wide wavelength region that extends far beyond the bandwidth of the light source. The detection of spurious light can be avoided by taking further precautions. In order to improve the signal-to-noise ratio, a pulsed LED can be used as a light source. The signal from the photodiode is measured while the LED is turned on, and another measurement is performed while the LED is off. The difference of the signals such obtained is due to the reflected light of the object to be measured, and not due to spurious light sources. Spurious light from the long wavelength region is effectively avoided by using silicon photodiodes as detectors. Their responsivity is practically zero for wavelengths greater than 1100 nm.

The spectral transmission of the colour filter layers does not change essentially with the angle of incidence. Such filter layers block all wavelengths below a certain wavelength (~800 nm) and transmit radiation of higher wavelengths without significant attenuation.

The electrical signal of the photodetector is proportional to the spectral integral of the transmission which is weighted with the spectral intensity of the light source. While the reference channel shows a cosine dependence on the angle of incidence, the angle meter channel shows a distinct behaviour. The ratio of the signals of the two channels is used to determine the angle of incidence quantitatively. In order to improve the measurement even of small angle variations, a filter spectrum of triangular shape can be chosen. This increases the sensitivity to changes of the angle, if a light source of small bandwidth is used. By spectrally weighting the actually measured signal with the responsivity of the photodiode, it can be seen that light near 1100 nm does not significantly contribute to the overall signal.

Advantages of this optical device are a larger amount of light reaching the photodetector and a better signal-to-noise ratio. Furthermore, the amount of unwanted external light is effectively blocked by the filter characteristics, thus improving the dynamic range.

### List of reference numerals

- 1: substrate
- 2: epitaxial layer
- 3: top layer
- 4: photodetector
- 5: further photodetector
- 6: filter
- 7: further filter
- 8: incident ray
- 9: further incident ray
- 10: main surface
- 11: object
- 12: first filter layer
- 13: second filter layer
- 14: third filter layer
- 15: interference filter
- 16: colour filter
- 17: further colour filter
- 18: further first filter layer
- 19: further second filter layer
- 20: further third filter layer
- 21: optical device for angle measurement
- 21₁: first optical device for angle measurement
- 21₂: second optical device for angle measurement
- 22: light source
- 23: housing
- 24: aperture
- 25: further aperture
- 26: window
- 27: further window
- 28: integrated circuit
- C₁: first circle
- C₂: second circle
- d: distance
- P₁: first intersection point
- P₂: second intersection point
- S₁: first cone
- S₂: second cone
- α: angle
- β: further angle
- α₁: first angle
- α₂: second angle

## Claims

1. An optical device for angle measurement, comprising:
- a substrate (1) of semiconductor material with a main surface (10),
- a photodetector (4) arranged in the substrate (1) at the main surface (10),
- a further photodetector (5) arranged in the substrate (1) at the main surface (10),
- a filter (6) arranged above the main surface (10) above the photodetector (4), and
- a further filter (7) arranged above the main surface (10) above the further photodetector (5),
**characterized in that**
- the filter (6) is a colour filter (16) comprising filter layers (12, 13, 14), wherein the spectral transmission of the colour filter layers does not change essentially with the angle of incidence of light,
- the further filter (7) includes an interference filter (15) and a further colour filter (17),
- the further colour filter (17) is essentially similar to the coulour filter (16) and acts as high-pass filter for longer wavelengths, wherein an overall transmission of the further colour filter (17) is small in the region of the visible light and high for higher wavelengths,
- the spectral transmission of the interference filter (15) shifts to smaller wavelengths for higher angles of incidence of light, and
- the photodetector (4) is used as reference channel sensor and the further photodetector is used as an angle meter channel sensor, wherein the ratio of the signals of the two channels is used to determine the angle of incidence of light quantitatively.

2. The optical device according to claim 1, further comprising:
the colour filter (16) including a first filter layer (12), a second filter layer (13) and a third filter layer (14), which form a red filter, a green filter and a blue filter, and
the further colour filter (17) including a further first filter layer (12), a further second filter layer (13) and a further third filter layer (14), which form a further red filter, a further green filter and a further blue filter.

3. The optical device according to claim 1 or 2, wherein
the interference filter (15) is arranged between the substrate (1) and the further colour filter (17).

4. The optical device according to one of claims 1 to 3, further comprising:
an epitaxial layer (2) of the substrate (1), the epitaxial layer (2) providing the main surface (10).

5. The optical device according to one of claims 1 to 4, further comprising:
a transparent top layer (3) on the main surface (10), the filter (6) and the further filter (7) being arranged on the top layer (3).

6. The optical device according to claim 5, further comprising:
an aperture (24) above the photodetector (4) and a further aperture above the further photodetector (5), the aperture (24) and the further aperture (25) being arranged in the top layer (3).

7. The optical device according to one of claims 1 to 6, further comprising:
a light source (22),
an opaque housing (23) accommodating the substrate (1) and the light source (22),
a window (26) of the housing (23) above the photodetector (4) and the further photodetector (5), and
a further window (27) of the housing (23) above the light source (22).

8. The optical device according to one of claims 1 to 7, further comprising:
an integrated circuit (28) configured for evaluating signals from the photodetector (4) and the further photodetector (5).

## Patentansprüche

1. Optische Vorrichtung zur Winkelmessung, umfassend:
- ein Substrat (1) aus Halbleitermaterial mit einer Hauptfläche (10),
- einen in dem Substrat (1) an der Hauptoberfläche (10) angeordneten Photodetektor (4),
- einen weiteren Fotodetektor (5), der in dem Substrat (1) an der Hauptoberfläche (10) angeordnet ist,
- einem oberhalb der Hauptfläche (10) über dem Fotodetektor (4) angeordneten Filter (6), und
- ein weiterer Filter (7), der über der Hauptoberfläche (10) über dem weiteren Fotodetektor (5) angeordnet ist,
**dadurch gekennzeichnet, dass**
- der Filter (6) ein Farbfilter (16) ist, der Filterschichten (12, 13, 14) umfasst, wobei sich die spektrale Transmission der Farbfilterschichten im Wesentlichen nicht mit dem Einfallswinkel des Lichts ändert,
- der weitere Filter (7) einen Interferenzfilter (15) und einen weiteren Farbfilter (17) umfasst,
- der weitere Farbfilter (17) im Wesentlichen dem Farbfilter (16) ähnlich ist und als Hochpassfilter für größere Wellenlängen wirkt, wobei eine Gesamttransmission des weiteren Farbfilters (17) im Bereich des sichtbaren Lichts gering und für höhere Wellenlängen hoch ist,
- sich die spektrale Transmission des Interferenzfilters (15) bei höheren Lichteinfallswinkeln zu kleineren Wellenlängen verschiebt, und
- der Photodetektor (4) als Referenzkanalsensor und der weitere Photodetektor als Winkelmesskanalsensor verwendet wird, wobei das Verhältnis der Signale der beiden Kanäle zur quantitativen Bestimmung des Lichteinfallswinkels verwendet wird.

2. Optische Vorrichtung nach Anspruch 1, ferner umfassend:
den Farbfilter (16) mit einer ersten Filterschicht (12),
einer zweiten Filterschicht (13) und einer dritten Filterschicht (14), die einen Rotfilter, einen Grünfilter und einen Blaufilter bilden, und
der weitere Farbfilter (17) mit einer weiteren ersten Filterschicht (12), einer weiteren zweiten Filterschicht (13) und einer weiteren dritten Filterschicht (14), die einen weiteren Rotfilter, einen weiteren Grünfilter und einen weiteren Blaufilter bilden.

3. Optische Vorrichtung nach Anspruch 1 oder 2, wobei
der Interferenzfilter (15) zwischen dem Substrat (1) und dem weiteren Farbfilter (17) angeordnet ist.

4. Optische Vorrichtung nach einem der Ansprüche 1 bis 3, ferner umfassend:
eine Epitaxialschicht (2) des Substrats (1), wobei die Epitaxialschicht (2) die Hauptoberfläche (10) bildet.

5. Optische Vorrichtung nach einem der Ansprüche 1 bis 4, ferner umfassend:
eine transparente Deckschicht (3) auf der Hauptfläche (10), wobei der Filter (6) und der weitere Filter (7) auf der Deckschicht (3) angeordnet sind.

6. Optische Vorrichtung nach Anspruch 5, ferner umfassend: eine Öffnung (24) oberhalb des Photodetektors (4) und eine weitere Öffnung oberhalb des weiteren Photodetektors (5), wobei die Öffnung (24) und die weitere Öffnung (25) in der Deckschicht (3) angeordnet sind.

7. Optische Vorrichtung nach einem der Ansprüche 1 bis 6, ferner umfassend:
eine Lichtquelle (22),
ein lichtundurchlässiges Gehäuse (23), das das Substrat (1) und die Lichtquelle (22) aufnimmt,
ein Fenster (26) des Gehäuses (23) oberhalb des Photodetektors (4) und des weiteren Photodetektors (5), und ein weiteres Fenster (27) des Gehäuses (23) oberhalb der Lichtquelle (22).

8. Optische Vorrichtung nach einem der Ansprüche 1 bis 7, ferner umfassend:
eine integrierte Schaltung (28), die zum Auswerten von Signalen des Photodetektors (4) und des weiteren Photodetektors (5) ausgebildet ist.

## Revendications

1. Dispositif optique pour la mesure d'angles, comprenant :
- un substrat (1) en matériau semi-conducteur avec une surface principale (10),
- un photodétecteur (4) disposé dans le substrat (1) au niveau de la surface principale (10),
- un photodétecteur supplémentaire (5) disposé dans le substrat (1) au niveau de la surface principale (10),
- un filtre (6) disposé au-dessus de la surface principale (10) au-dessus du photodétecteur (4), et
- un filtre supplémentaire (7) disposé au-dessus de la surface principale (10) au-dessus du photodétecteur supplémentaire (5),
**caractérisé en ce que**
- le filtre (6) est un filtre coloré (16) comprenant des couches de filtre (12, 13, 14), dans lequel la transmission spectrale des couches de filtre coloré ne change pas essentiellement avec l'angle d'incidence de la lumière,
- le filtre supplémentaire (7) comprend un filtre interférentiel (15) et un filtre coloré supplémentaire (17),
- le filtre coloré supplémentaire (17) est essentiellement similaire au filtre coloré (16) et agit comme un filtre passe-haut pour les longueurs d'onde plus grandes, dans lequel une transmission globale du filtre coloré supplémentaire (17) est faible dans la région de la lumière visible et élevée pour les longueurs d'onde plus grandes,
- le photodétecteur (4) est utilisé comme capteur de canal de référence et le photodétecteur supplémentaire est utilisé comme capteur de canal de mesure d'angle, le rapport des signaux des deux canaux étant utilisé pour déterminer quantitativement l'angle d'incidence de la lumière.

2. Dispositif optique selon la revendication 1, comprenant en outre :
le filtre de couleur (16) comprenant une première couche de filtre (12), une deuxième couche de filtre (13) et une troisième couche de filtre (14), qui forment un filtre rouge, un filtre vert et un filtre bleu, et
le filtre coloré supplémentaire (17) comprenant une première couche de filtre supplémentaire (12), une deuxième couche de filtre supplémentaire (13) et une troisième couche de filtre supplémentaire (14), qui forment un filtre rouge supplémentaire, un filtre vert supplémentaire et un filtre bleu supplémentaire.

3. Dispositif optique selon la revendication 1 ou 2, dans lequel
le filtre interférentiel (15) est disposé entre le substrat (1) et le filtre coloré supplémentaire (17).

4. Dispositif optique selon l'une des revendications 1 à 3, comprenant en outre :
une couche épitaxiale (2) du substrat (1), la couche épitaxiale (2) fournissant la surface principale (10).

5. Dispositif optique selon l'une des revendications 1 à 4, comprenant en outre :
une couche supérieure transparente (3) sur la surface principale (10), le filtre (6) et l'autre filtre (7) étant disposés sur la couche supérieure (3).

6. Dispositif optique selon la revendication 5, comprenant en outre :
une ouverture (24) au-dessus du photodétecteur (4) et une ouverture supplémentaire au-dessus du photodétecteur supplémentaire (5), l'ouverture (24) et l'ouverture supplémentaire (25) étant disposées dans la couche supérieure (3) .

7. Dispositif optique selon l'une des revendications 1 à 6, comprenant en outre :
une source de lumière (22),
un boîtier opaque (23) recevant le substrat (1) et la source de lumière (22),
une fenêtre (26) du boîtier (23) au-dessus du photodétecteur (4) et du photodétecteur supplémentaire (5), et
une fenêtre supplémentaire (27) du boîtier (23) au-dessus de la source de lumière (22).

8. Dispositif optique selon l'une des revendications 1 à 7, comprenant en outre :
un circuit intégré (28) configuré pour évaluer les signaux provenant du photodétecteur (4) et du photodétecteur supplémentaire (5).
